# EUROPÄISCHE PATENTSCHRIFT

(11) **EP 3 007 024 B1**
(45) Veröffentlichungstag und Bekanntmachung des Hinweises auf die Patenterteilung: **17.10.2018**
(21) Anmeldenummer: 15176845.4
(22) Anmeldetag: 15.07.2015
(51) Int. Cl.: G05D 1/02, B60L 11/18

(54) **VERFAHREN ZUR POSITIONIERUNG EINES KRAFTFAHRZEUGS ZUM KONTAKTLOSEN LADEN UND KRAFTFAHRZEUG**
METHOD FOR POSITIONING OF A MOTOR VEHICLE FOR CONTACTLESS CHARGING AND MOTOR VEHICLE
PROCEDE DE POSITIONNEMENT D'UN VEHICULE AUTOMOBILE DESTINE AU CHARGEMENT SANS CONTACT ET VEHICULE AUTOMOBILE

(30) Priorität: 06.10.2014 DE 102014014859
(43) Veröffentlichungstag der Anmeldung: 13.04.2016
(73) Patentinhaber: AUDI AG, 85045 Ingolstadt (DE)
(72) Erfinder: Heinemann, Patrick, 85092 Kösching (DE); Elias, Björn, 85120 Hepberg (DE); Schuller, Florian, 85737 Ismaning (DE)

(56) Entgegenhaltungen:
- WO-A1-2014/177413
- DE-A1-102012 003 992
- US-A1- 2014 035 565

## Beschreibung

Die Erfindung betrifft ein Verfahren zur Positionierung eines Kraftfahrzeugs in einer zum kontaktlosen Laden eines Energiespeichers des Kraftfahrzeugs durch eine Ladeplatte geeigneten Ladeposition sowie ein zugeordnetes Kraftfahrzeug.

Elektrische Energiespeicher von Kraftfahrzeugen mit Elektroantrieb, insbesondere von reinen Elektro-Fahrzeugen bzw. Plug-in-Hybriden, sollen regelmäßig geladen werden, um den Betrieb des Kraftfahrzeugs bzw. einen besonders energieeffizienten Betrieb zu ermöglichen. Eine besonders komfortable Wiederaufladung von Energiespeichern eines Kraftfahrzeugs ist bei einem induktiven Laden möglich, bei dem eine in ein Infrastrukturelement, beispielsweise eine Garage oder einen Parkplatz, integrierte Ladeplatte genutzt wird, um Energie induktiv auf eine entsprechende Ladeplatte des Kraftfahrzeugs zum Laden des Energiespeichers zu übertragen. Um eine hohe Effizienz zu erreichen ist es vorteilhaft, wenn die Ladeplatte des Kraftfahrzeugs sehr genau über der fahrzeugexternen Ladeplatte positioniert wird. Da die Ladeplatte während einer Positionierung des Kraftfahrzeugs bezüglich der Ladeplatte jedoch häufig nicht durchgängig für einen Fahrer erkennbar ist, ist es vorteilhaft Assistenzsysteme vorzusehen, die einen Fahrer bei der Positionierung des Kraftfahrzeugs durch Informationen unterstützen bzw. die das Kraftfahrzeug assistiert oder zumindest teilautomatisiert in eine zum Laden geeignete Position führen.

Es ist möglich, eine Markierung im Umfeld einer Ladeplatte zu nutzen und eine Positionierung des Kraftfahrzeugs an der geeigneten Ladeposition mit Hilfe dieser Markierung durchzuführen. Eine Markierung kann durch ein Fahrzeugsystem erfasst werden, beispielsweise indem sie mit einer Kamera erfasst wird und die Kamerabilder ausgewertet werden. Ein Fahrerassistenzsystem kann genutzt werden, um das Kraftfahrzeug in eine definierte Position bezüglich der Markierung zu führen bzw. um einem Fahrer bei einer Führung des Kraftfahrzeugs in diese Position zu assistieren.

Bei einer Nutzung einer markierungsbasierten Positionierung eines Kraftfahrzeugs bezüglich einer Ladeplatte ist es bisher erforderlich, dass die Markierung an einer vorgegebenen relativen Position zur Ladeplatte angeordnet wird oder dass die relative Position der Markierung zu einer Ladeplatte durch einen Nutzer ausgemessen und manuell im Kraftfahrzeug eingegeben wird. Eine feste Vorgabe der relativen Position zwischen Markierung und Ladeplatte ist in vielen Anwendungssituationen, beispielsweise bei der Integration einer Ladeplatte in eine private Garage, nicht möglich, da aufgrund der umgebenden Infrastruktur Abweichungen unvermeidbar sind. Ein manuelles Nachmessen und Einstellen der relativen Position durch einen Nutzer senkt den Komfort bei der Nutzung der entsprechenden Ladeplatte erheblich, womit Komfortvorteile gegenüber einem Laden von Energiespeichern mit Hilfe eines Ladekabels oder Ähnlichem weitgehend verlorengehen.

Relevanter Stand der Technik ist in US2014/033565 und in DE102012003992 zu finden.

Der Erfindung liegt somit die Aufgabe zugrunde, ein Verfahren zur Positionierung eines Kraftfahrzeugs bezüglich einer Ladeplatte anzugeben, das demgegenüber verbessert ist und insbesondere eine flexible relative Anordnung von Markierung und Ladeplatte ermöglicht, ohne den Ladekomfort merklich zu senken. Die Erfindung wird durch die unabhängigen Ansprüche definiert.

Die abhängigen Ansprüche beschreiben besonders vorteilhafte Ausführungsformen.

Die Aufgabe wird erfindungsgemäß durch ein Verfahren der eingangs genannten Art gelöst, das die folgenden Schritte umfasst:
a) Erfassen von Markierungssensordaten mit einer Sensoreinrichtung des Kraftfahrzeugs, wobei die Markierungssensordaten eine Markierung, die ortsfest im Umfeld der Ladeplatte und beabstandet von der Ladeplatte angeordnet ist, beschreiben,
b) Laden einer eine relative Lage der Ladeplatte zur Markierung beschreibenden Lageinformation aus einer Speichereinrichtung durch eine Steuereinrichtung des Kraftfahrzeugs, wobei die Lageinformation durch das Kraftfahrzeug oder ein weiteres Kraftfahrzeug vorangehend ermittelt und auf der Speichereinrichtung gespeichert wurde,
c) Bestimmen einer eine relative Lage der Markierung bezüglich des Kraftfahrzeugs beschreibenden Markierungsinformation aus den Markierungssensordaten durch die Steuereinrichtung,
d) Bestimmen einer eine relative Lage der Ladeplatte zu dem Kraftfahrzeug beschreibenden Ladeplatteninformation aus der Markierungsinformation und der Lageinformation durch die Steuereinrichtung,
e) Führung des Kraftfahrzeugs in die Ladeposition durch Auslösen wenigstens eines von der Ladeplatteninformation abhängigen Fahrhinweises an einen Fahrer des Kraftfahrzeugs und/oder wenigstens eines von der Ladeplatteninformation abhängigen, längs- und/oder querführenden Fahreingriffs durch die Steuereinrichtung.

Erfindungsgemäß wird vorgeschlagen, im Rahmen der Positionierung des Kraftfahrzeugs eine Lageinformation zu nutzen, die vorangehend durch das Kraftfahrzeug selbst oder durch ein anderes Kraftfahrzeug ermittelt wurde. Es wird ausgenutzt, dass zumindest Teile der genutzten Kraftfahrzeuge bereits einen oder mehrere Sensoren, insbesondere Kameras, umfassen, durch die sowohl die Markierung als auch die Ladeplatte erfasst werden kann, womit in vielen Nutzungssituationen, in denen ein Kraftfahrzeug bezüglich der Ladeplatte positioniert werden soll, eine Lageinformation, die eine relative Lage der Ladeplatte zur Markierung beschreibt, alleine durch Auswertung von Sensordaten eines Kraftfahrzeugs ermittelt werden kann. Da jedoch nicht alle Kraftfahrzeuge über eine ausreichende Sensorik verfügen und in einigen Situationen, in denen das Kraftfahrzeug bezüglich der Ladeplatte positioniert werden soll, die Ladeplatte, beispielsweise durch eine geschlossene Schneedecke, nicht erkennbar sein kann, wird durch das erfindungsgemäße Verfahren ermöglicht, eine einmal bestimmte Lageinformation durch das gleiche Kraftfahrzeug wieder zu verwenden bzw. Lageinformationen zu nutzen, die durch andere Kraftfahrzeuge bereitgestellt werden.

Aufgrund der automatischen Ermittlung der Lageinformation und der Bereitstellung für spätere Zeitpunkte bzw. für weitere Kraftfahrzeuge ist es im erfindungsgemäßen Verfahren möglich, die relative Lage der Markierung bezüglich der Ladeplatte flexibel festzulegen, ohne dass ein manuelles Vermessen dieser Lage und eine Eingabe dieser Lage durch einen Nutzer erforderlich sind. Zur Positionierung müssen durch das Kraftfahrzeug ausschließlich Markierungssensordaten erfasst werden, wonach diese zur Bestimmung einer relativen Lage der Markierung bezüglich des Kraftfahrzeugs ausgewertet werden können, aus der, gemeinsam mit der geladenen Lageinformation, eine relative Lage der Ladeplatte zu dem Kraftfahrzeug bestimmbar ist. Mit Hilfe der die relative Lage der Ladeplatte bezüglich des Kraftfahrzeugs beschreibenden Ladeplatteninformation kann das Kraftfahrzeug in die Ladeposition geführt werden, die zum Laden des Energiespeichers des Kraftfahrzeugs durch eine Ladeplatte geeignet ist. Fahrhinweise bzw. Fahreingriffe können derart bestimmt werden, dass die relative Lage der Ladeplatte zum Kraftfahrzeug nach einem Befolgen des Fahrhinweises bzw. einer Durchführung des Fahreingriffs einer vorgegebenen relativen Lage entspricht, die zum Laden des Energiespeichers geeignet ist, wobei insbesondere eine fahrzeugseitige Ladeplatte der fahrzeugexternen Lageplatte gegenüberliegt. Die vorgegebene relative Lage ist durch die Kraftfahrzeuggeometrie bestimmt und kann steuereinrichtungsseitig gespeichert sein. Im Rahmen der Führung des Kraftfahrzeugs zu der Ladeposition können weitere Umfelddaten berücksichtigt werden.

Die Führung des Kraftfahrzeugs durch längs- und/oder querführende Fahreingriffe kann insbesondere im Rahmen eines assistierten oder zumindest teilautomatisierten Fahrbetriebs erfolgen. Dies ermöglicht eine besonders exakte Positionierung des Kraftfahrzeugs bezüglich der Ladeplatte.

Als Markierung kann eine künstlich angebrachte Markierung genutzt werden, die vorteilhaft an einer senkrechten Fläche, beispielsweise einer Wand, angeordnet sein kann. Durch die Nutzung einer Markierung an einer senkrechten Fläche ist diese auch bei widrigen Witterungsbedingungen gut zu erkennen.

Eine relative Lage zwischen zwei Objekten kann im erfindungsgemäßen Verfahren jeweils ausschließlich eine relative Position bezeichnen. Vorteilhaft beschreibt eine Lage jedoch jeweils eine relative Position und eine relative Orientierung.

Es ist vorteilhaft, die relative Lage der Markierung bezüglich des Kraftfahrzeugs wiederholt zu erfassen und die Führung des Kraftfahrzeugs entsprechend anzupassen. Daher ist es möglich, dass im Rahmen der Führung des Kraftfahrzeugs die Schritte a), c) und d) des Verfahrens wiederholt durchgeführt werden, wobei die im Rahmen der Führung genutzte Ladeposition in Abhängigkeit der jeweils in Schritt d) ermittelten Ladeplatteninformation angepasst wird.

Zu einem Zeitpunkt vor Schritt a) können durch die Sensoreinrichtung die Markierung beschreibende vorbereitend ermittelte Markierungssensordaten und durch die oder eine weitere Sensoreinrichtung die Ladeplatte beschreibende vorbereitend ermittelte Ladeplattensensordaten erfasst werden, wonach durch Auswertung der vorbereitend ermittelten Markierungssensordaten und der vorbereitend ermittelten Ladeplattensensordaten die Lageinformation ermittelt und auf der Speichereinrichtung gespeichert wird. Es ist auch möglich, dass die Lageinformation durch ein weiteres Kraftfahrzeug ermittelt wird, wobei die Sensoreinrichtung und die weitere Sensoreinrichtung in diesem Fall jeweils Sensoreinrichtungen des weiteren Kraftfahrzeugs sind. Das beschriebene Vorgehen kann im Rahmen des erfindungsgemäßen Verfahrens genutzt werden, es ist jedoch auch möglich, die beschriebenen Schritte als separates Verfahren zu betrachten, durch das eine Lageinformation auf der Speichereinrichtung zur späteren Verwendung durch das gleiche und/oder ein anderes Kraftfahrzeug im Rahmen einer Positionierung des jeweiligen Kraftfahrzeugs bezüglich der Ladeplatte bereitgestellt wird.

Aus den vorbereitend ermittelten Markierungssensordaten kann eine vorbereitend ermittelte Markierungsinformation bestimmt werden, die die relative Lage der Markierung bezüglich des Kraftfahrzeugs beschreibt. Zudem kann aus den vorbereitend ermittelten Ladeplattensensordaten eine vorbereitend ermittelte Ladeplatteninformation ermittelt werden, die eine relative Lage der Ladeplatte zu dem Kraftfahrzeug beschreibt. Aus der vorbereitend ermittelten Markierungsinformation und der vorbereitend ermittelten Ladeplatteninformation kann, insbesondere durch eine Koordinatensystemtransformation, die Lageinformation bestimmt werden.

Als Speichereinrichtung kann eine fahrzeugexterne Servereinrichtung verwendet werden, auf die über eine Kommunikationseinrichtung des Kraftfahrzeugs drahtlos zugegriffen wird. Die Servereinrichtung, beispielsweise ein Backend-Server, kann Lageinformationen speichern, die von mehreren verschiedenen Kraftfahrzeugen bereitgestellt werden. Somit können einmal durch ein Kraftfahrzeug an die Servereinrichtung bereitgestellte Lageinformationen von beliebigen weiteren Kraftfahrzeugen genutzt werden, die mit der Servereinrichtung kommunizieren. Die Nutzung einer fahrzeugexternen Servereinrichtung ist besonders vorteilhaft, wenn Lageinformationen auch an Kraftfahrzeuge bereitgestellt werden, die aufgrund einer relativ einfachen Sensorik nicht ausgebildet sind, selbst eine Lageinformation durch eine Erfassung der Ladeplatte und der Markierung zu bestimmen.

Auf der Speichereinrichtung können mehrere, verschiedenen Ladeplatten zugeordnete, potentielle Lageinformationen gespeichert werden, von denen eine in Abhängigkeit der Markierungssensordaten und/oder einer durch eine Positionserfassungseinrichtung des Kraftfahrzeugs erfassten Positionsinformation als die zu ladende Lageinformation ausgewählt wird. So kann eine Positionserfassungseinrichtung, beispielsweise ein GPS-System, genutzt werden, um eine momentane Position des Kraftfahrzeugs zu bestimmen, wonach eine Positionsinformation, insbesondere die Position des Kraftfahrzeugs selbst und/oder eine Position der Markierung in geodätischen Koordinaten, im Rahmen des Ladevorgangs der Lageinformation an die Speichereinrichtung übertragen wird, wonach diese in Abhängigkeit der Positionsinformation eine der potentiellen Lageinformationen als die zu ladende Lageinformation auswählt und an das Kraftfahrzeug übermittelt. Vorzugsweise werden die Lageinformationen mit einer jeweils zugeordneten Position gespeichert, wobei diejenige der potentiellen Lageinformationen als die zu ladende Lageinformation ausgewählt wird, deren Position am nächsten an der als Positionsinformation übermittelten Position liegt.

Alternativ oder ergänzend ist es auch möglich, eine Ladeplatte bzw. eine zugehörige Markierung zu identifizieren, indem eine aus den Markierungssensordaten gewonnene Identifikationsinformation ausgewertet wird. Beispielsweise kann die Markierung einen Strichcode oder einen QR-Code umfassen, der in den Markierungssensordaten erkannt und aus dem eine Identifikationsinformation gewonnen wird. Bei einer entsprechenden Kodierung der Markierungen kann eine Ladeplatte, der die Markierung zugeordnet ist, eindeutig erkannt werden. Alternativ oder ergänzend können auch mehrere Markierungen für eine Ladeplatte vorgesehen sein, wobei aufgrund der Identifikationsinformation jeweils eine für die in den Markierungssensordaten erkannte Markierung korrekte Lageinformation geladen werden kann. Das Vorsehen einer Identifikationsinformation ist zudem vorteilhaft, da bei einer Anordnung mehrerer Ladeplatten in einem relativ beschränkten Bereich, beispielsweise in einer Reihe von Parkplätzen oder in einem Parkhaus, eine in den Markierungssensordaten erkannte Identifikationsinformation zusätzlich genutzt werden kann, um gezielt mit einer einer der Ladeplatten zugeordneten Kommunikationseinrichtung zu kommunizieren, um beispielsweise Ladevorgänge einzuleiten oder Ähnliches.

Nach einem Erreichen der Ladeposition kann im erfindungsgemäßen Verfahren überprüft werden, ob ein Ladevorgang erfolgreich durchgeführt werden kann, wonach bei einem erfolglosen Ladevorgang eine durch das Kraftfahrzeug ermittelte neue Lageinformation auf der Speichereinrichtung gespeichert wird und/oder die Lageinformation auf der Speichereinrichtung gelöscht oder als ungültig markiert wird. Das Speichern einer neuen Lageinformation ist insbesondere dann möglich, wenn vor oder während der Führung des Kraftfahrzeugs zu der Ladeposition sowohl die Markierung als auch die Ladeplatte durch Sensoren des Kraftfahrzeugs erfasst wurden, womit eine relative Lage zwischen der Markierung und der Ladeplatte und somit eine neue Lageinformation bestimmt werden kann. In diesem Fall ist es ergänzend möglich, dass das Kraftfahrzeug nach dem erfolglosen Ladevorgang in eine Ladeposition geführt wird, die in Abhängigkeit einer Ladeplatteninformation bestimmt wird, die in Abhängigkeit der neuen Lageinformation bestimmt wird. Kann durch das Kraftfahrzeug weder vor noch nach dem erfolglosen Ladevorgang eine Lageinformation bestimmt werden und wird aufgrund des erfolglosen Ladevorgangs erkannt, dass die bisherige Lageinformation nicht zutreffend ist, kann diese durch die Speichereinrichtung gelöscht oder als ungültig markiert werden. Es ist insbesondere möglich, dass die Speichereinrichtung gespeicherte Lageinformationen erst löscht oder als ungültig markiert, wenn durch mehrere, beispielsweise drei verschiedene, Kraftfahrzeuge ein erfolgloser Ladevorgang registriert und an die Speichereinrichtung gemeldet wurde.

Eine neue Lageinformation kann insbesondere bestimmt werden, indem durch die Sensoreinrichtung die Markierung beschreibende neue Markierungssensordaten und durch die oder eine weitere Sensoreinrichtung die Ladeplatte beschreibende neue Ladeplattensensordaten erfasst werden, wonach durch Auswertung der neuen Markierungssensordaten und der neuen Ladeplattensensordaten die neue Lageinformation ermittelt und auf der Speichereinrichtung gespeichert wird. Als neue Markierungssensordaten können auch Markierungssensordaten verwendet werden, die bereits vor dem erfolglosen Ladevorgang ermittelt wurden und beispielsweise als Markierungssensordaten im Rahmen der Bestimmung des Fahrhinweises bzw. Fahreingriffs genutzt wurden.

Sollen im erfindungsgemäßen Verfahren oder einem vorgeschalteten Verfahren zur Ermittlung und Bereitstellung einer Lageinformation Markierungssensordaten und Ladeplattensensordaten erfasst werden, so kann dies vorteilhaft zeitgleich bzw. ohne eine dazwischen liegende Bewegung des Kraftfahrzeugs erfolgen. Bei einer Erfassung der Markierungssensordaten und der Ladeplattensensordaten an einer im Wesentlichen gleichen Position beschreiben die Ladeplatteninformation und die Markierungsinformation Positionen in einem im Wesentlichen gleichen Koordinatensystem, womit eine Lageinformation direkt aus diesen Informationen bestimmt werden kann. Alternativ wäre es auch möglich, die Markierungssensordaten und die Ladeplattensensordaten zeitlich beabstandet während einer Bewegung des Kraftfahrzeugs zu erfassen. In diesem Fall könnte zur Berechnung der Lageinformation zusätzlich eine aus Egodaten und/oder Umfelddaten des Kraftfahrzeugs berechnete Bewegung des Kraftfahrzeugs zwischen den Erfassungszeitpunkten berücksichtigt werden.

Die Sensoreinrichtung und/oder die weitere Sensoreinrichtung können eine Kamera sein. Beispielsweise können die Markierungssensordaten durch eine den Frontbereich des Kraftfahrzeugs abbildende Frontkamera und die Ladeplattensensordaten durch eine weitwinklig das unmittelbare Kraftfahrzeugvorfeld erfassende Kamera, beispielsweise eine Kamera eines Top-view- oder Corner-view-Systems, erfasst werden. Eine Entfernung bzw. Orientierung der Ladeplatte bzw. der Markierung von dem Kraftfahrzeug bzw. bezüglich des Kraftfahrzeugs kann erkannt werden, wenn die Ladeplatte bzw. die Markierung eine bekannte äußere Form und/oder ein bekanntes Muster aufweisen. Ergänzend oder alternativ ist es möglich, Sensoren zu nutzen, die eine direkte Abstandsbestimmung ermöglichen, beispielsweise Time-of-Flight-Kameras, Stereokameras, Laserscanner oder Ultraschallsensoren.

Neben dem erfindungsgemäßen Verfahren betrifft die Erfindung ein Kraftfahrzeug, das eine zur Durchführung des erfindungsgemäßen Verfahrens ausgebildete Steuereinrichtung umfasst. Die zum erfindungsgemäßen Verfahren erläuterten Merkmalen lassen sich mit den dort beschriebenen Vorteilen äquivalent auf das erfindungsgemäße Kraftfahrzeug übertragen und umgekehrt.

Weitere Vorteile und Einzelheiten der Erfindung zeigen die folgenden Ausführungsbeispiele sowie die zugehörigen Zeichnungen. Dabei zeigen schematisch:
- Fig. 1: ein Ablaufdiagramm eines Ausführungsbeispiels eines erfindungsgemäßen Verfahrens,
- Fig. 2: ein Ablaufdiagramm eines Ausführungsbeispiels für die Bereitstellung von Lageinformationen auf der Speichereinrichtung, und
- Fig. 3: ein Ausführungsbeispiel eines erfindungsgemäßen Kraftfahrzeugs.

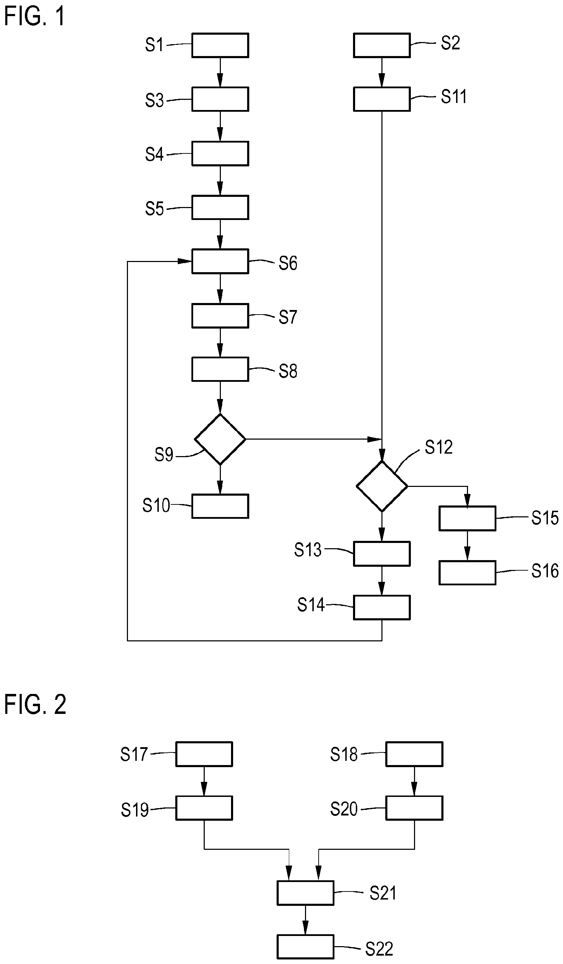

Fig. 1 zeigt ein Verfahren zur Positionierung eines Kraftfahrzeugs in einer zum kontaktlosen Laden eines Energiespeichers des Kraftfahrzeugs durch eine Ladeplatte geeigneten Position. Im Schritt S1 werden durch eine Sensoreinrichtung des Kraftfahrzeugs Markierungssensordaten erfasst, die eine Markierung beschreiben, die ortsfest im Umfeld der Ladeplatte und beabstandet von der Ladeplatte angeordnet ist. Bei der Markierung kann es sich um eine künstliche, an einer senkrechten Fläche, beispielsweise an einer Wand, angebrachte Markierung handeln. Die Markierungssensordaten können Bilddaten einer Kamera sein, die insbesondere im Frontbereich des Kraftfahrzeugs angeordnet ist und das Kraftfahrzeugvorfeld abbildet.

Parallel hierzu werden in Schritt S2 in der gleichen Kraftfahrzeugposition Ladeplattensensordaten erfasst, die die Ladeplatte selbst beschreiben. Dies können Bilddaten einer Weitwinkelkamera im vorderen Kraftfahrzeugbereich, insbesondere einer Corner-view-Kamera oder einer Top-view-Kamera, sein. Die Erfassung von Ladeplatteninformationen ist wie später mit Bezug auf die Schritte S11 bis S14 beschrieben vorteilhaft, um bei einem Scheitern eines Ladevorgangs eine neue Lageinformation zu bestimmen und an eine Speichereinrichtung bereitzustellen. Schritt S2 sowie die Schritte S11 bis S14 sind in den meisten Fällen zur korrekten Positionierung eines Kraftfahrzeugs bezüglich einer Ladeplatte jedoch nicht erforderlich. Somit kann auf Schritt S2 verzichtet werden bzw. die Ladeplattensensordaten können verworfen werden, wenn keine klare Identifizierung bzw. Bestimmung einer Lage der Ladeplatte bezüglich des Kraftfahrzeugs aus diesen Ladeplattensensordaten möglich ist. Dies kann beispielsweise der Fall sein, wenn das Kraftfahrzeug über keine ausreichende Sensorik verfügt, um die Lage der Ladeplatte bezüglich des Kraftfahrzeugs zu ermitteln, oder wenn die Ladeplatte verdeckt ist, beispielsweise durch eine Schicht aus Blättern oder aus Schnee.

In Schritt S3 werden die Markierungssensordaten durch einen Bildverarbeitungsalgorithmus verarbeitet, um eine Identifikationsinformation, beispielsweise einen Strichcode oder einen QR-Code, als Element der Markierung zu erkennen. Diese Identifikationsinformation wird in Schritt S4 genutzt, um eine Lageinformation, die der entsprechenden Identifikationsinformation zugeordnet ist, von der Speichereinrichtung zu laden. Vorteilhaft wird als Speichereinrichtung eine Servereinrichtung genutzt, wobei die Kommunikation mit der Servereinrichtung drahtlos über eine Kommunikationseinrichtung des Kraftfahrzeugs erfolgt. Eine Kommunikation mit der Servereinrichtung kann durch eine Car2x-Kommuniaktion, beispielsweise gemäß dem IEEE 802.11P-Standard, oder über eine Mobilfunkkommunikation erfolgen. Alternativ wäre es möglich, eine Speichereinrichtung im Kraftfahrzeug selbst zu nutzen.

Alternativ oder ergänzend zur Erkennung einer Identifikationsinformation in den Markierungssensordaten in Schritt S3 wäre es möglich, durch eine Positionserfassungseinrichtung des Kraftfahrzeugs die momentane Position des Kraftfahrzeugs als Positionsinformation zu ermitteln und die zu ladende Lageinformation in Abhängigkeit der Positionsinformation zu bestimmen. Dies ist insbesondere dann möglich, wenn im Umfeld des Kraftfahrzeugs eine einzige oder sehr wenige Ladeplatten vorhanden sind, beispielsweise bei einer Nutzung einer Ladeplatte in einer privaten Garage.

In Schritt S5 wird durch die Steuereinrichtung eine Ladeplatteninformation bestimmt, die die relative Lage der Ladeplatte zu dem Kraftfahrzeug beschreibt. Hierzu wird aus den Markierungssensordaten eine Markierungsinformation bestimmt, die die relative Lage der Markierung bezüglich des Kraftfahrzeugs beschreibt. In den Markierungssensordaten wird zunächst eine Mustererkennung durchgeführt, um die Markierung in den Markierungssensordaten zu erkennen. Durch Auswertung der äußeren Form, der Größe und insbesondere eines Musters der Markierung werden ein Abstand der Markierung zu dem Kraftfahrzeug und eine Orientierung der Markierung bezüglich des Kraftfahrzeugs bestimmt. Die von der Speichereinrichtung geladene Lageinformation beschreibt eine relative Position und Orientierung der Ladeplatte zu der Markierung. Durch eine Koordinatensystemtransformation wird aus der Markierungsinformation und der Lageinformation die Ladeplatteninformation bestimmt, die die Position und Orientierung der Ladeplatte bezüglich des Kraftfahrzeugs beschreibt.

In Schritt S6 wird wenigstens ein Fahreingriff bestimmt, durch den das Kraftfahrzeug in die Ladeposition geführt werden soll. Der Fahreingriff bzw. die Fahreingriffe werden derart bestimmt, dass die relative Lage der Ladeplatte zu dem Kraftfahrzeug nach Durchführung der Fahreingriffe einer vorgegebenen relativen Lage entspricht, in der sich die fahrzeugexterne Ladeplatte und eine fahrzeugseitige Ladeplatte gegenüberliegen.

In Schritt S7 erfolgt eine zumindest teilautomatisierte Führung des Kraftfahrzeugs zu der Ladeposition durch eine Ausführung des wenigstens einen Fahreingriffs. Während der Führung des Kraftfahrzeugs werden einerseits wiederholt Markierungssensordaten erfasst, aus denen aktualisierte Ladeplatteninformationen und entsprechend aktualisierte Fahrereingriffe bestimmt werden, andererseits werden weitere Umweltinformationen erfasst, um während der Führung des Kraftfahrzeugs Hindernisse zu vermeiden und Ähnliches. Verfahren zur Führung von Kraftfahrzeugen in definierte Positionen sind im Stand der Technik bekannt und sollen nicht detailliert erläutert werden. Alternativ zu einer zumindest teilautomatisierten Führung des Kraftfahrzeugs wäre es möglich, das Kraftfahrzeug in die Ladeposition zu führen, indem entsprechende Fahrhinweise an einen Fahrer ausgegeben werden.

Nach einem Erreichen der Ladeposition wird die Führung des Kraftfahrzeugs beendet und das Kraftfahrzeug steht. Daraufhin wird in Schritt S8 durch eine Kommunikation mit einer der Ladeplatte zugeordneten Kommunikationseinrichtung ein Laden des Kraftfahrzeugs gestartet. Nach einem vorgegebenen Zeitintervall wird in Schritt S9 überprüft, ob dieses Laden erfolgreich war. Ist dies der Fall, so ist das Kraftfahrzeug in Schritt S10 geladen und der normale Fahrbetrieb des Kraftfahrzeugs kann wieder aufgenommen werden.

Wird in Schritt S9 jedoch ermittelt, dass ein Laden fehlgeschlagen ist, so ist ein möglicher Grund dafür eine nicht zutreffende Lageinformation. Um die Lageinformation zu korrigieren bzw. als nicht zutreffend zu markieren wird zunächst in Schritt S11 eine Auswertung der in Schritt S2 ermittelten Ladeplattensensordaten durchgeführt, um eine neue Ladeplatteninformation zu bestimmen. In Schritt S12 wird überprüft, ob die Ladeplattensensordaten eine Bereitstellung einer neuen Ladeplatteninformation ermöglichten. Wie bereits erwähnt kann dies nicht der Fall sein, falls die Sensorik des Kraftfahrzeugs keine ausreichende Bildqualität liefert oder falls die Ladeplatte ganz oder teilweise verdeckt ist.

Wurde eine neue Ladeplatteninformation erfolgreich ermittelt, so wird in Schritt S13 eine neue Lageinformation ermittelt, indem aus der neuen Ladeplatteninformation und der in Schritt S6 ermittelten Markierungsinformation als neue Markierungsinformation eine neue Lageinformation berechnet wird, die die relative Lage zwischen Lageplatte und Markierung beschreibt.

Die neue Lageinformation wird in Schritt S14 auf der Speichereinrichtung gespeichert, beispielsweise indem sie über eine Kommunikationseinrichtung des Kraftfahrzeugs übertragen wird. Zudem wird die bisherige Lageinformation gelöscht bzw. als ungültig markiert. Anschließend wird das Verfahren ab Schritt S6 wiederholt, um das Kraftfahrzeug zu einer neuen Ladeposition zu führen, die in Abhängigkeit der neuen Lageposition bestimmt wird.

Wird in Schritt S12 ermittelt, dass keine neue Ladeplatteninformation ermittelt werden kann, so wird in Schritt S15 die bisherige Lageinformation auf der Speichereinrichtung als ungültig markiert, beispielsweise indem eine entsprechende Nachricht über eine Kommunikationseinrichtung des Kraftfahrzeugs an die Speichereinrichtung übertragen wird. Anschließend wird in Schritt S16 ein Hinweis an den Fahrer ausgegeben, dass eine Führung zu der Ladeplatte nicht möglich ist und der normale Fahrbetrieb wird fortgesetzt.

Fig. 2 zeigt die Schritte eines Verfahrens zur Bereitstellung einer Lageinformation, die eine relative Lage einer Ladeplatte zu einer Markierung beschreibt, auf einer Speichereinrichtung, wonach die Lageinformation beispielsweise in dem in Fig. 1 gezeigten Verfahren nutzbar ist.

In Schritt S17 werden durch eine Sensoreinrichtung des Kraftfahrzeugs Markierungssensordaten erfasst, die eine Markierung, die ortsfest im Umfeld der Ladeplatte und beabstandet von der Ladeplatte angeordnet ist, beschreiben. Parallel hierzu werden an der im Wesentlichen gleichen Kraftfahrzeugposition in Schritt S18 Ladeplattensensordaten erfasst, die die Ladeplatte beschreiben.

In Schritt S19 wird aus den Markierungssensordaten eine Markierungsinformation ermittelt, die eine relative Lage der Markierung zum Kraftfahrzeug beschreibt. Im Schritt S20 erfolgt eine Berechnung einer Ladeplatteninformation, die eine relative Lage der Ladeplatte zum Kraftfahrzeug beschreibt aus den Lageplattensensordaten.

Durch eine Koordinatensystemtransformation wird in Schritt S21 aus der Markierungsinformation und der Ladeplatteninformation eine Lageinformation berechnet, die eine relative Lage der Ladeplatte zu der Markierung beschreibt. Diese wird in Schritt S22 auf der Speichereinrichtung gespeichert. Insbesondere kann eine Speicherung auf einer Servereinrichtung erfolgen, mit der beispielsweise über eine Car2x-Kommunikation oder eine Mobilfunkkommunikation kommuniziert wird.

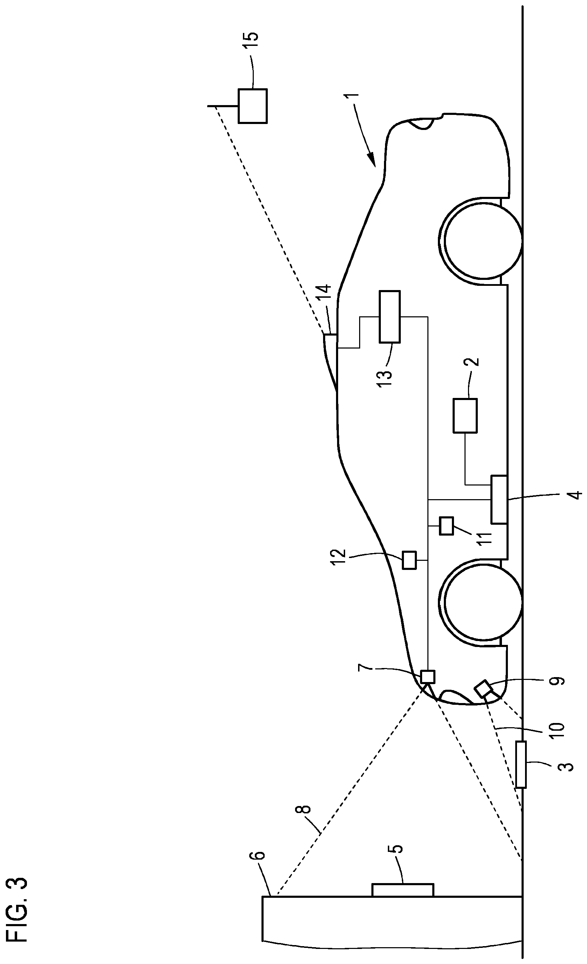

Fig. 3 zeigt ein Kraftfahrzeug, das eine Steuereinrichtung 11 umfasst, die zur Ausführung der mit Bezug auf Fig. 1 und Fig. 2 erläuterten Verfahren ausgebildet ist. Das Kraftfahrzeug 1 umfasst einen zu ladenden Energiespeicher 2, der durch eine fahrzeugexterne Ladeplatte 3 geladen werden soll. Hierzu soll das Kraftfahrzeug 1 in eine Ladeposition geführt werden, in der eine kraftfahrzeugseitige Ladeplatte 4 möglichst exakt über der fahrzeugexternen Ladeplatte 3 positioniert ist. Die Führung des Kraftfahrzeugs 1 erfolgt wie detailliert zur Fig. 1 erläutert. Durch eine Kamera 7 des Kraftfahrzeugs mit dem Erfassungsbereich 8 wird eine an einer Wand 6 angeordnete Markierung 5 erfasst, und durch eine Steuereinrichtung 11 wird als Markierungsinformation eine relative Lage der Markierung 5 zu dem Kraftfahrzeug 1 bestimmt. Zudem wertet die Steuereinrichtung 11 die Bilddaten der Kamera 7 aus, um eine Identifikationsinformation zu gewinnen, die als kodierte Information durch die Markierung 5 dargestellt wird und die die kraftfahrzeugexterne Lageplatte 3 beschreibt. Durch ein Navigationssystem 12 mit einem integrierten GPS-Empfänger wird der Steuereinrichtung 11 zusätzlich eine momentane Position des Kraftfahrzeugs bereitgestellt.

Über die Kommunikationseinrichtung 13 und die Antenne 14 kommuniziert die Steuereinrichtung 11 anschließend mit der Speichereinrichtung 15, die eine fahrzeugexterne Servereinrichtung ist, um eine die relative Lage der fahrzeugexternen Ladeplatte 3 zu der Markierung 5 als Lageinformation von der Speichereinrichtung 15 zu laden. Auf der Speichereinrichtung 15 sind mehrere potentielle Lageinformationen gespeichert, die verschiedenen kraftfahrzeugexternen Ladeplatten 3 zugeordnet sind. Die Auswahl, welche der potentiellen Lageinformationen als zu ladende Lageinformationen an das Kraftfahrzeug 1 übermittelt werden soll, erfolgt in Abhängigkeit der ermittelten Identifikationsinformation sowie zusätzlich der Fahrzeugposition. Mit Hilfe der von der Speichereinrichtung 15 geladenen Lageinformation und der ermittelten Markierungsinformation kann durch die Steuereinrichtung 11, wie zur Fig. 1 erläutert, eine Ladeplatteninformation bestimmt werden, die die relative Lage der Ladeplatte 3 zu dem Kraftfahrzeug 1 beschreibt und die Steuereinrichtung 11 kann in Abhängigkeit von dieser Fahrhinweise bzw. Fahreingriffe bestimmen, um das Kraftfahrzeug in eine Ladeposition zu führen und eine Führung des Kraftfahrzeugs zu dieser Position durch Ausführung der bestimmten längs- und/oder querführende Fahreingriffe bzw. durch die Ausgabe der bestimmten Fahrhinweise einleiten.

Das Kraftfahrzeug 1 ist zudem ausgebildet, Lageinformationen auf der Speichereinrichtung 15 zu speichern, wie in Fig. 1 in den Schritten S2 und S11 bis S14 dargestellt und wie zu Fig. 2 erläutert. Hierzu werden wie vorangehend erläutert über die Kamera 7 Markierungssensordaten erfasst. Zusätzlich werden über die Kamera 9 mit dem Erfassungswinkel 10, die eine Weitwinkelkamera eines Top-view-Systems ist, Ladeplattensensordaten erfasst, die Bilddaten sind, in denen die Ladeplatte 3 abgebildet ist. Wie zur Fig. 2 erläutert wird durch die Steuereinrichtung 11 durch Auswertung der Markierungssensordaten und der Ladeplattensensordaten eine Lageinformation bestimmt und über die Kommunikationseinrichtung 13 und die Antenne 14 zur Speicherung auf die Speichereinrichtung 15 übertragen.

## Patentansprüche

1. Verfahren zur Positionierung eines Kraftfahrzeugs (1) in einer zum kontaktloses Laden eines Energiespeichers (2) des Kraftfahrzeugs (1) durch eine Ladeplatte (3) geeigneten Ladeposition, umfassend die Schritte:
a) Erfassen von Markierungssensordaten mit einer Sensoreinrichtung des Kraftfahrzeugs (1), wobei die Markierungssensordaten eine Markierung (5), die ortsfest im Umfeld der Ladeplatte (3) und beabstandet von der Ladeplatte (3) angeordnet ist, beschreiben,
b) Laden einer eine relative Lage der Ladeplatte (3) zur Markierung (5) beschreibenden Lageinformation aus einer Speichereinrichtung (15) durch eine Steuereinrichtung (11) des Kraftfahrzeugs (1), wobei die Lageinformation durch das Kraftfahrzeug (1) oder ein weiteres Kraftfahrzeug vorangehend ermittelt und auf der Speichereinrichtung (11) gespeichert wurde, und wobei auf der Speichereinrichtung (11) mehrere, verschiedenen Ladeplatten (3) zugeordnete, potentielle Lageinformationen gespeichert werden, von denen eine in Abhängigkeit einer durch eine Positionserfassungseinrichtung des Kraftfahrzeugs (1) erfassten Positionsinformation als die zu ladende Lageinformation ausgewählt wird,
c) Bestimmen einer eine relative Lage der Markierung (5) bezüglich des Kraftfahrzeugs (1) beschreibenden Markierungsinformation aus den Markierungssensordaten durch die Steuereinrichtung (11),
d) Bestimmen einer eine relative Lage der Ladeplatte (3) zu dem Kraftfahrzeug (1) beschreibenden Ladeplatteninformation aus der Markierungsinformation und der Lageinformation durch die Steuereinrichtung (11),
e) Führung des Kraftfahrzeugs (1) in die Ladeposition durch Auslösen wenigstens eines von der Ladeplatteninformation abhängigen Fahrhinweises an einen Fahrer des Kraftfahrzeugs und/oder wenigstens eines von der Ladeplatteninformation abhängigen, längs- und/oder querführenden Fahreingriffs durch die Steuereinrichtung (11).

2. Verfahren nach Anspruch 1,
**dadurch gekennzeichnet,**
**dass** zu einem Zeitpunkt vor Schritt a) durch die Sensoreinrichtung die Markierung (5) beschreibende vorbereitend ermittelte Markierungssensordaten und durch die oder eine weitere Sensoreinrichtung die Ladeplatte (3) beschreibende vorbereitend ermittelte Ladeplattensensordaten erfasst werden, wonach durch Auswertung der vorbereitend ermittelten Markierungssensordaten und der vorbereitend ermittelten Ladeplattensensordaten die Lageinformation ermittelt und auf der Speichereinrichtung (15) gespeichert wird.

3. Verfahren nach Anspruch 1 oder 2,
**dadurch gekennzeichnet,**
**dass** als Speichereinrichtung (15) eine fahrzeugexterne Servereinrichtung verwendet wird, auf die über eine Kommunikationseinrichtung (13) des Kraftfahrzeugs (1) drahtlos zugegriffen wird.

4. Verfahren nach einem der vorangehenden Ansprüche,
**dadurch gekennzeichnet,**
**dass** die zu ladende Lageinformation zusätzlich in Abhängigkeit der Markierungssensordaten ausgewählt wird.

5. Verfahren nach einem der vorangehenden Ansprüche,
**dadurch gekennzeichnet, dass** nach einem Erreichen der Ladeposition überprüft wird, ob ein Ladevorgang erfolgreich durchgeführt werden kann, wonach bei einem erfolglosen Ladevorgang eine durch das Kraftfahrzeug (1) ermittelte neue Lageinformation auf der Speichereinrichtung (15) gespeichert wird und/oder die Lageinformation auf der Speichereinrichtung (15) gelöscht oder als ungültig markiert wird.

6. Verfahren nach Anspruch 5,
**dadurch gekennzeichnet,**
**dass** die neue Lageinformation bestimmt wird, indem durch die Sensoreinrichtung die Markierung (5) beschreibende neue Markierungssensordaten und durch die oder eine weitere Sensoreinrichtung die Ladeplatte (3) beschreibende neue Ladeplattensensordaten erfasst werden, wonach durch Auswertung der neuen Markierungssensordaten und der neuen Ladeplattensensordaten die neue Lageinformation ermittelt und auf der Speichereinrichtung (15) gespeichert wird.

7. Verfahren nach einem der vorangehenden Ansprüche,
**dadurch gekennzeichnet,**
**dass** die Sensoreinrichtung und/oder die weitere Sensoreinrichtung eine Kamera (7) ist.

8. Kraftfahrzeug,
**dadurch gekennzeichnet,**
**dass** es eine zur Durchführung des Verfahrens gemäß eines der vorangehen Ansprüche ausgebildete Steuereinrichtung (11) umfasst.

## Claims

1. Method for positioning a motor vehicle (1) in a charging position suitable for contactless charging of an energy store (2) of the motor vehicle (1) using a charging plate (3), comprising the steps:
a) Detection of marking sensor data with a sensor device of the motor vehicle (1), wherein the marking sensor data describe a marking (5), which is arranged in a stationary manner in the vicinity of the charging plate (3) and spaced apart from the charging plate (3),
b) loading a piece of positional information describing a relative position of the charging plate (3) to the marking (5) from a storage device (15) by a control device (11) of the motor vehicle (1), wherein the piece of positional information was previously determined by the motor vehicle (1) or a further motor vehicle and stored on the storage device (11), and wherein several potential pieces of positional information assigned to different charging plates (3) are stored on the storage device (11), of which one is selected as the positional information to be loaded in dependence on a piece of positional information detected by a position detection device of the motor vehicle (1),
c) determination of a piece of marking information describing a relative position of the marking (5) relative to the motor vehicle (1) from the marking sensor data by the control device (11),
d) determination of a piece of charging plate information describing a relative position of the charging plate (3) to the motor vehicle (1) from the marking information and the positional information by the control device (11),
e) guidance of the motor vehicle (1) into the charging position by triggering at least one driving instruction depending on the charging plate information to a driver of the motor vehicle and/or at least one longitudinally and/or transversely guiding driving engagement dependent on the charging plate information by the control device (11).

2. Method according to Claim 1,
**characterised in**
**that** at a point in time before step a) preliminarily determined marking sensor data describing the marking (5) are detected by the sensor device or preliminarily determined marking sensor data describing the charging plate (3) are detected by the or a further sensor device, after which the positional information is determined by evaluation of the preliminarily determined marking sensor data and the preliminarily determined charging plate sensor data and is stored on the storage device (15).

3. Method according to claim 1 or 2,
**characterised in**
**that** a vehicle-external server device is used as storage device (15), which is accessed wirelessly via a communication device (13) of the motor vehicle (1).

4. Method according to any one of the preceding claims,
**characterised in**
**that** the positional information to be loaded is additionally selected in dependence on the marking sensor data.

5. Method according to any one of the preceding claims,
**characterised in**
**that** after reaching the charging position it is checked whether a charging process can be successfully performed, after which in the case of an unsuccessful charging process, a new piece of positional information determined by the motor vehicle (1) is stored on the storage device (15) and/or the positional information is deleted or is marked as invalid on the storage device (15).

6. Method according to claim 5,
**characterised in**
**that** the new piece of positional information is determined, in that new marking sensor data describing the marking (5) are detected by the sensor device and new charging plate sensor data describing the charging plate (3) are detected by the or a further sensor device, after which the new positional information is determined by evaluation of the new marking sensor data and the new charging plate sensor data and is stored on the storage device (15).

7. Method according to any one of the preceding claims,
**characterised in**
**that** the sensor device and/or the further sensor device is a camera (7).

8. Motor vehicle,
**characterised in**
**that** it comprises a control device (11) designed for implementing the method according to any one of the preceding claims.

## Revendications

1. Procédé de positionnement d'un véhicule automobile (1) dans une position de chargement appropriée au chargement sans contact d'un accumulateur d'énergie (2) du véhicule automobile (1) par une plaque de chargement (3), comprenant les étapes suivantes :
a) la détection de données de capteur de marquage avec un dispositif de capteur du véhicule automobile (1), dans lequel les données de capteur de marquage décrivent un marquage (5) qui est disposé fixement dans l'environnement de la plaque de chargement (3) et à distance de la plaque de chargement (3),
b) le chargement d'une information de position décrivant une position relative de la plaque de chargement (3) pour le marquage (5) d'un dispositif d'enregistrement (15) par un dispositif de commande (11) du véhicule automobile (1), dans lequel l'information de position a été déterminée par le véhicule automobile (1) ou un autre véhicule automobile précédemment et enregistrée sur le dispositif d'enregistrement (11), et dans lequel plusieurs informations de position potentielles associées à différentes plaques de position (3) sont enregistrées sur le dispositif d'enregistrement (11), dont une est sélectionnée en fonction d'une information de position détectée par un dispositif de détection de position du véhicule automobile (1) en tant qu'information de position à charger,
c) la détermination d'une information de marquage décrivant une position relative du marquage (5) par rapport au véhicule automobile (1) à partir des données de capteur de marquage par le dispositif de commande (11),
d) la détermination d'une information de plaque de chargement décrivant une position relative de la plaque de chargement (3) par rapport au véhicule automobile (1) à partir de l'information de marquage et de l'information de position par le dispositif de commande (11),
e) le guidage du véhicule automobile (1) dans la position de chargement par le déclenchement d'au moins une indication de conduite dépendant de l'information de plaque de chargement à un conducteur du véhicule automobile et/ou d'au moins une intervention de conduite dépendant de l'information de plaque de chargement, à guidage longitudinal et/ou transversal par le dispositif de commande (11).

2. Procédé selon la revendication 1,
**caractérisé en ce**
**qu'**à un moment avant l'étape a), les données de capteur de marquage déterminées au préalable décrivant le marquage (5) sont détectées par le dispositif de capteur et les données de capteur de plaque de chargement déterminées au préalable décrivant la plaque de chargement (3), par le ou un autre dispositif de capteur, après quoi, par évaluation des données de capteur de marquage déterminées au préalable et des données de capteur de plaque de chargement déterminées au préalable, l'information de position est déterminée et enregistrée sur le dispositif d'enregistrement (15).

3. Procédé selon la revendication 1 ou 2,
**caractérisé en ce**
**qu'**un dispositif serveur externe au véhicule est utilisé en tant que dispositif d'enregistrement (15), sur lequel on peut avoir accès sans fil par l'intermédiaire d'un dispositif de communication (13) du véhicule automobile (1).

4. Procédé selon l'une quelconque des revendications précédentes,
**caractérisé en ce**
**que** l'information de position à charger est en outre sélectionnée en fonction des données de capteur de marquage.

5. Procédé selon l'une quelconque des revendications précédentes,
**caractérisé en ce**
**qu'**après l'atteinte de la position de chargement, il est vérifié si un processus de chargement peut être réalisé avec succès, après quoi, pour un processus de chargement infructueux, une nouvelle information de position déterminée par le véhicule automobile (1) est enregistrée sur le dispositif d'enregistrement (15) et/ou l'information de position est supprimée ou marquée comme non valide sur le dispositif d'enregistrement (15).

6. Procédé selon la revendication 5,
**caractérisé en ce**
**que** la nouvelle information de position est déterminée **en ce que** de nouvelles données de capteur de marquage décrivant le marquage (5) sont détectées par le dispositif de capteur et de nouvelles données de capteur de plaque de chargement décrivant la plaque de chargement (3), par le ou un autre dispositif de capteur, après quoi, par évaluation des nouvelles données de capteur de marquage et des nouvelles données de capteur de plaque de chargement, la nouvelle information de position est déterminée et enregistrée sur le dispositif d'enregistrement (15).

7. Procédé selon l'une quelconque des revendications précédentes,
**caractérisé en ce**
**que** le dispositif de capteur et/ou l'autre dispositif de capteur est une caméra (7).

8. Véhicule automobile,
**caractérisé en ce**
**qu'**il comprend un dispositif de commande (11) conçu pour la réalisation du procédé selon l'une quelconque des revendications précédentes.
